# EUROPÄISCHE PATENTANMELDUNG

(11) **EP 2 886 759 A2**
(43) Veröffentlichungstag der Anmeldung: **24.06.2015**
(21) Anmeldenummer: 14199359.2
(22) Anmeldetag: 19.12.2014
(51) Int. Cl.: E05B 81/30, E05B 81/08, H01F 7/14

(54) **Kraftfahrzeugschloss**

(30) Priorität: 21.12.2013 DE 102013114751
(71) Anmelder: Brose Schliesssysteme GmbH & Co. KG, 42369 Wuppertal (DE)
(72) Erfinder: Reinert, Jörg, 42899 Remscheid (DE); El-Hamoumi, Abdelali, 42369 Wuppertal (DE); Bogorats, Arkadi, 42781 Haan (DE)
(74) Vertreter: Gottschald, Jan

(57) **Zusammenfassung**

Die Erfindung betrifft ein Kraftfahrzeugschloss mit einem Stellelement (2) und einem Antrieb (3) für die Verstellung des Stellelements (2), wobei der Antrieb (3) einen Rotor (4) mit einer Spulenanordnung (5) und einen Stator (6) mit einer Permanentmagnetanordnung (7) aufweist, wobei die Spulenanordnung (5) mindestens eine Spule (8, 9, 10) zur Erzeugung eines magnetischen Rotorfelds und die Permanentmagnetanordnung (7) mindestens einen Permanentmagneten (11, 12) zur Erzeugung eines magnetischen Statorfelds aufweist. Es wird vorgeschlagen, dass elektrische Antriebsanschlüsse (16, 17, 18) vorgesehen sind, die über eine Kopplungsanordnung (19) rotorwinkelunabhängig mit der Spulenanordnung (5) des Rotors (4) elektrisch gekoppelt sind und dass durch eine Ansteuerung der Spulenanordnung (5) über die Antriebsanschlüsse (16, 17, 18) mindestens zwei magnetisch stabile Antriebsstellungen des Rotors (4) erzeugbar sind.

## Beschreibung

Die Erfindung betrifft ein Kraftfahrzeugschloss gemäß dem Oberbegriff von Anspruch 1, ein Kraftfahrzeugschloss gemäß dem Oberbegriff von Anspruch 13 sowie ein Verfahren zur Ansteuerung solcher Kraftfahrzeugschlösser gemäß Anspruch 16.

Das in Rede stehende Kraftfahrzeugschloss findet Anwendung bei allen Arten von Verschlusselementen eines Kraftfahrzeugs. Dazu gehören insbesondere Seitentüren, Hecktüren, Heckklappen, Heckdeckel oder Motorhauben. Diese Verschlusselemente können grundsätzlich auch nach Art von Schiebetüren ausgestaltet sein.

Ein bekanntes Kraftfahrzeugschloss (DE 102 32 280 A1) ist einer Kraftfahrzeugtür zugeordnet, die sich in Abhängigkeit von einem Verriegelungszustand des Kraftfahrzeugschlosses über einen Türinnengriff oder einen Türaußengriff öffnen lässt.

Ganz allgemein sind die Verriegelungszustände wie folgt definiert: Im Verriegelungszustand "Entriegelt" lässt sich die Kraftfahrzeugtür sowohl von innen als auch von außen öffnen. Im Verriegelungszustand "verriegelt" lässt sich die Kraftfahrzeugtür von innen, nicht jedoch von außen öffnen. Im Verriegelungszustand "Entriegelt-Kindergesichert" lässt sich die Kraftfahrzeugtür von außen, nicht jedoch von innen öffnen. Im Verriegelungszustand "Verriegelt-Kindergesichert" lässt sich die Kraftfahrzeugtür weder von innen, noch von außen öffnen, jedoch von innen in den Verriegelungszustand "Entriegelt-Kindergesichert" überführen. Im Verriegelungszustand "Diebstahlgesichert" schließlich lässt sich die Kraftfahrzeugtür weder von innen noch von außen öffnen oder in einen anderen Verriegelungszustand überführen.

Für die Einstellung der verschiedenen Verriegelungszustände ist das bekannte Kraftfahrzeugschloss mit einem Stellelement und einem Antrieb für die Verstellung des Stellelements ausgestattet. Der Antrieb weist einen schnell laufenden Antriebsmotor mit Rotor und Stator auf, wobei der Rotor üblicherweise eine Spulenanordnung und der Stator üblicherweise eine Permanentmagnetanordnung aufweist. Zur Einstellung unterschiedlicher Verriegelungszustände wird der Antrieb solange bestromt, bis der Rotor gegen einen Endanschlag läuft.

Nachteilig bei dem bekannten Kraftfahrzeugschloss ist die Tatsache, dass das Anfahren mehrerer Antriebsstellungen die Realisierung entsprechender Endanschläge erfordert. Dies führt bei mehreren anzufahrenden Antriebsstellungen zu einem hohen konstruktiven Aufwand.

Ein Kraftfahrzeugschloss mit einem Antrieb, das den obigen konstruktiven Aufwand vermeidet, ist in der DE 10 2008 012 563 A1 gezeigt. Dieses Kraftfahrzeugschloss bildet den Ausgangspunkt für die vorliegende Erfindung. Hier werden die verschiedenen Antriebsstellungen nach Art eines Schrittmotors umgesetzt. In einer Variante trägt der Rotor eine Spulenanordnung und der Stator eine Permanentmagnetanordnung, was grundsätzlich mit der Problematik der Kontaktierung der Spulenanordnung des Rotors einhergeht.

Der Erfindung liegt das Problem zugrunde, das bekannte Kraftfahrzeugschloss derart auszugestalten und weiterzubilden, dass sich ein elektrisch und mechanisch robuster Aufbau ergibt.

Wesentlich ist die grundsätzliche Überlegung, dass die Kontaktierung der Spulenanordnung zu deren Ansteuerung rotorwinkelunabhängig erfolgen kann. "Rotorwinkelunabhängig" bedeutet hier unabhängig von der Winkelstellung des Rotors bezogen auf die geometrische Rotorachse. Dies ermöglicht, anders als bei den bei Gleichstrommaschinen bekannten Kommutatoranordnungen, eine besonders einfache Umsetzung der Kontaktierung der Spulenanordnung.

Im Einzelnen sind elektrische Antriebsanschlüsse vorgesehen, die über eine Kopplungsanordnung rotorwinkelunabhängig mit der Spulenanordnung des Rotors elektrisch gekoppelt sind. Durch eine Ansteuerung der Spulenanordnung über die Antriebsanschlüsse und die Kopplungsanordnung lassen sich vorschlagsgemäß mindestens zwei magnetisch stabile Antriebsstellungen des Rotors erzeugen. Die Formulierung "magnetisch-stabil" bedeutet hier, dass die Ansteuerung der Spulenanordnung mit dem resultierenden Magnetfeld dafür sorgt, dass das Stellelement bei einer Auslenkung aus der jeweiligen Antriebsstellung heraus stets zurück in diese Antriebsstellung getrieben wird. Der Begriff "Ansteuerung der Spulenanordnung" bedeutet hier, dass es durch eine entsprechende Beschaltung der Spulenanordnung zu einer Bestromung mindestens einer Spule kommt.

Besonders interessant bei der vorschlagsgemäßen Lösung ist die Tatsache, dass bei geeigneter Auslegung eine Manipulation der Stellung des Rotors durch ein von außen angelegten Magnetfeld, beispielsweise im Rahmen eines Einbruchsversuchs, nicht möglich ist. Da der Rotor der vorschlagsgemäßen Lösung selbst nicht mit einem Permanentmagneten bestückt sein muß, reagiert der Rotor bei unbestromter Spulenanordnung auf ein solches von Außen angelegtes Magnetfeld nicht mit einer Stellungsänderung. Daher stellt ein hier vorgeschlagenes Kraftfahrzeugschloss eine besonders hohe Einbruchsicherheit bereit.

Bei der bevorzugten Ausgestaltung gemäß Anspruch 2 lassen sich die magnetisch stabilen Antriebsstellungen des Rotors durch unterschiedliche stationäre Bestromung der Spulenanordnung erzeugen. Der Begriff "stationäre Bestromung" bedeutet hier, dass sich die eingestellte Bestromung im Zeitbereich nicht ändert. Dabei kann die Bestromung auch gepulst o. dgl. sein. Im einfachsten Fall wird für eine stationäre Bestromung in obigem Sinne eine konstante Spannung auf den betreffenden Teil der Spulenanordnung aufgeschaltet. Bei den bevorzugten Ausgestaltungen gemäß den Ansprüchen 4 bis 7 und 10 weist die Kopplungsanordnung eine Schleifringanordnung auf, die aufgrund der rotorwinkelunabhängigen Kopplung auf besonders einfache Weise realisiert sein kann.

Bei der besonders bevorzugten Ausgestaltung gemäß Anspruch 6 ist jeder Schleifring mit vorbestimmten Spulen der Spulenanordnung elektrisch gekoppelt, insbesondere verbunden. Im einfachsten Fall ist hier der Schleifring mit genau einer Spule der Spulenanordnung elektrisch gekoppelt, insbesondere verbunden. Dadurch ergibt sich die höchste Flexibilität bei der Ansteuerung des Antriebs.

Besonders für den Fall der aus insgesamt drei Spulen bestehenden Spulenanordnung sind die Ausgestaltungen gemäß den Ansprüchen 7 und 8 vorteilhaft. Hier sind die Spulen elektrisch in einer Dreiecksschaltung oder einer Sternschaltung verschaltet. Dadurch lassen sich alle drei Spulen mit insgesamt drei Antriebsanschlüssen ansteuern.

Nach einer weiteren Lehre gemäß Anspruch 14, der eigenständige Bedeutung zukommt, wird ein Kraftfahrzeugschloss beansprucht, bei dem in zumindest einem Teil der Antriebsstellungen des Rotors die magnetischen Achsen der Spulen der Spulenanordnung jeweils bezogen auf die geometrische Rotorachse winkelversetzt zu der magnetischen Achse bzw. zu den magnetischen Achsen der Permanentmagnetanordnung sind. Dies lässt sich beispielsweise bewerkstelligen, indem beim Anfahren der Antriebsstellungen jeweils mindestens zwei Spulen der Spulenanordnung angesteuert werden. Durch die vorschlagsgemäße Lösung ist die Lage der Antriebsstellungen unabhängig von der konstruktiven Ausgestaltung des Stators, sodass die Lage der Antriebsstellungen des Rotors weitgehend frei gewählt werden kann.

Nach einer weiteren Lehre gemäß Anspruch 16, der ebenfalls eigenständige Bedeutung zukommt, wird ein Verfahren zur Ansteuerung eines vorschlagsgemäßen Kraftfahrzeugschlosses beansprucht.

Wesentlich nach dieser weiteren Lehre ist, dass die Spulenanordnung für das Erzeugen von mindestens zwei magnetisch stabilen Antriebsstellungen des Rotors unterschiedlich stationär bestromt wird. Auf alle Ausführungen zu dem vorschlagsgemäßen Kraftfahrzeugschloss, die geeignet sind, das vorschlagsgemäße Verfahren zu erläutern, darf verwiesen werden.

Im Folgenden wird die Erfindung anhand einer lediglich ein Ausführungsbeispiel darstellenden Zeichnung näher erläutert. In der Zeichnung zeigt
- Fig. 1: die für die Erfindung wesentlichen Bestandteile eines vorschlagsgemäßen Kraftfahrzeugschlosses,
- Fig. 2: den Antrieb des Kraftfahrzeugschlosses gemäß Fig. 1 entlang der Schnittlinie II-II,
- Fig. 3: den Antrieb gemäß Fig. 2 entlang der Schnittlinie III-III in verschiedenen Antriebsstellungen und
- Fig. 4: die Beschaltung der Spulenanordnung des Kraftfahrzeugschlosses gemäß Fig. 4 a) in einer Dreiecksschaltung und b) in einer Sternschaltung.

Es darf vorab darauf hingewiesen werden, dass in der Zeichnung nur die Komponenten des vorschlagsgemäßen Kraftfahrzeugschlosses dargestellt sind, die für die Erläuterung der Lehre notwendig sind. Entsprechend ist eine Schlossfalle, die in üblicher Weise mit einem Schließbolzen o. dgl. zusammenwirkt und die mittels einer Sperrklinke in einer Hauptschließstellung und in einer gegebenenfalls vorhandenen Vorschließstellung gehalten wird, in der Zeichnung nicht dargestellt.

Das Kraftfahrzeugschloss weist ein um eine geometrische Stellelementachse 1 verstellbares Stellelement 2 und einen Antrieb 3 für die Verstellung des Stellelements 2 auf. Der Antrieb 3 dient der Einstellung unterschiedlicher Funktionszustände des Kraftfahrzeugschlosses, was weiter unten im Detail erläutert wird.

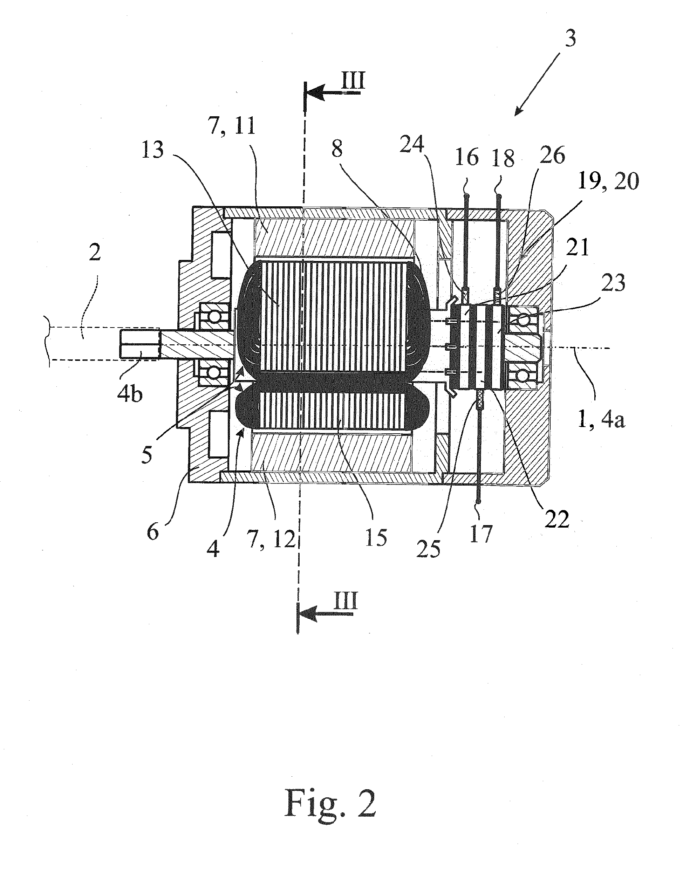

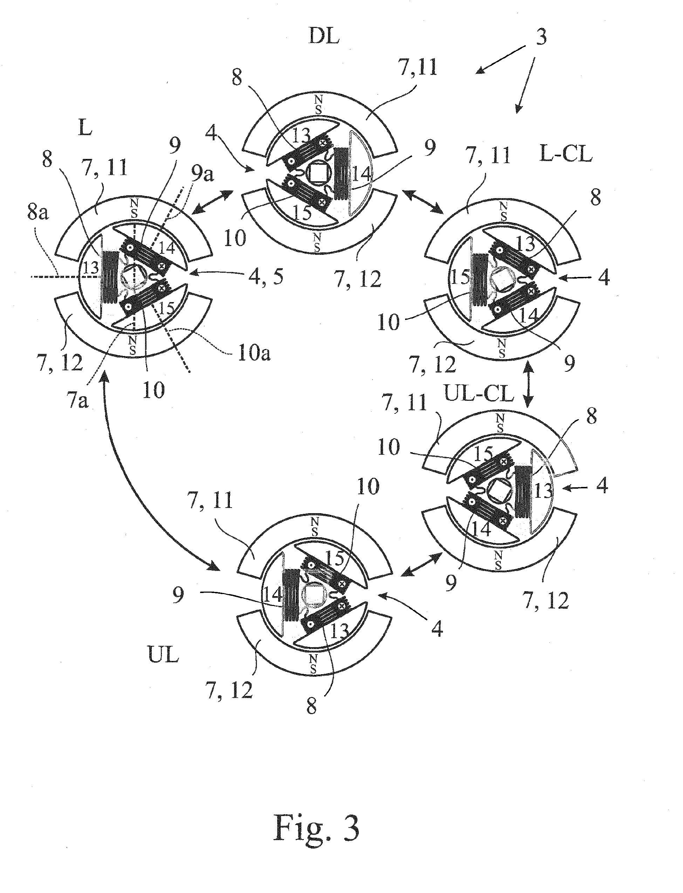

Der Antrieb 3 weist einen Rotor 4 mit einer Spulenanordnung 5 und einen Stator 6 mit einer Permanentmagnetanordnung 7 auf. Dies ist am besten einer Zusammenschau der Fig. 2 und 3 zu entnehmen. Dabei weist die Spulenanordnung 5 mindestens eine Spule 8, 9, 10, hier und vorzugsweise genau drei Spulen 8, 9, 10, auf. Die Spulen 8, 9, 10 sind in noch zu erläuternder Weise auf dem Rotor 4 verteilt angeordnet.

Die Permanentmagnetanordnung 7 weist mindestens einen Permanentmagneten 11, 12, hier und vorzugsweise zwei Permanentmagnete 11, 12, auf. Die beiden Permanentmagnete 11, 12 sind mit ihren magnetischen Achsen 7a aufeinander ausgerichtet, wie in der Darstellung gemäß Fig. 3 zu entnehmen ist.

Der Rotor 4 weist hier drei Rotorflügel 13, 14, 15 auf, an denen die Spulen 8, 9, 10 angeordnet sind. Die Rotorflügel 13, 14, 15 bilden zusammen mit den Spulen 8, 9, 10 drei magnetische Pole der Rotors 4.

Wesentlich ist nun, dass elektrische Antriebsanschlüsse 16, 17, 18 vorgesehen sind, die über eine Kopplungsanordnung 19 rotorwinkelunabhängig mit der Spulenanordnung 5 des Rotors 4 elektrisch gekoppelt sind. Durch eine Ansteuerung der Spulenanordnung 5 sind über die Antriebsanschlüsse 16, 17, 18 mindestens zwei magnetisch stabile Antriebsstellungen des Rotors 4 erzeugbar. "Magnetisch stabile Antriebsstellung" bedeutet wie oben angedeutet, dass während der Ansteuerung der Spulenanordnung 5, also während deren Bestromung, der Rotor 4 durch magnetische Anziehungskräfte stets in die entsprechende Antriebsstellung drängt. Eine geringfügige Auslenkung des Rotors 4 durch eine Einwirkung von Außen führt unabhängig von der Richtung der Auslenkung zu dem obigen Zurückdrängen des Rotors 4 in die Antriebsstellung. Dies bedeutet wiederum, dass ein Anfahren der Antriebsstellungen ohne die Notwendigkeit eines Endanschlags o. dgl. erfolgen kann. Das ist verschleiß- und geräuschreduzierend und vereinfacht die mechanische Konstruktion.

Bei dem dargestellten und insoweit bevorzugten Ausführungsbeispiel ist der Antrieb 3 als Direktantrieb ausgestaltet. Dies ist vorliegend weit zu verstehen und bedeutet, dass zwischen dem Antrieb 3 und dem Stellelement 2 auf jegliche Getriebekomponenten, als auf jegliche Getriebeübersetzungen, verzichtet wird.

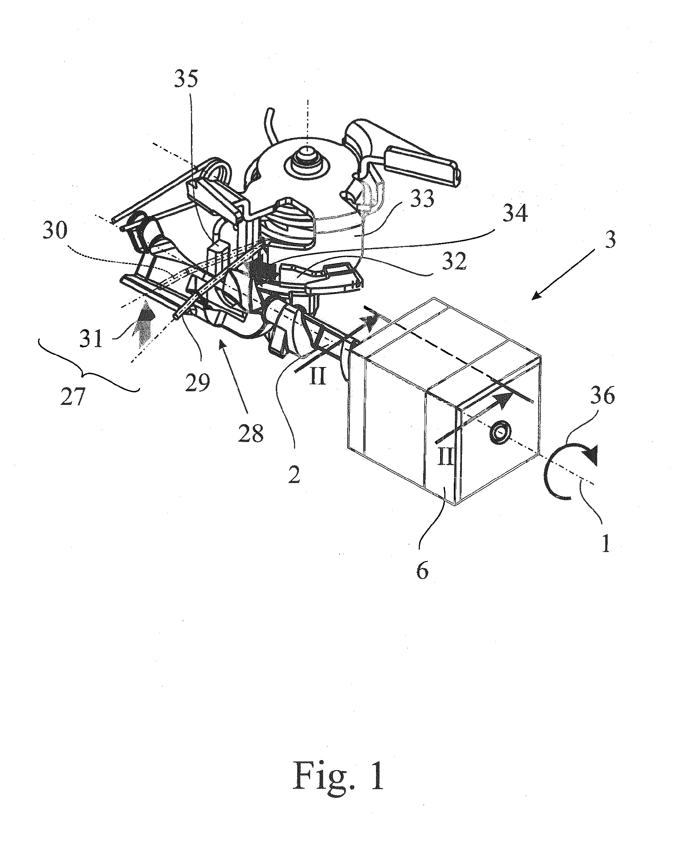

Es ergibt sich aus einer Zusammenschau der Fig. 1 und 2, dass der Rotor 4 eine Rotorwelle 4b zum Ausleiten von Antriebsbewegungen aufweist, die dem Stellelement 2 antriebstechnisch zugeordnet ist. Hier und vorzugsweise ist die geometrische Stellelementachse 1 identisch zu der geometrischen Rotorachse 4a.

In vorteilhafter Weise lassen sich durch unterschiedliche stationäre Bestromung der Spulenanordnung 5 mindestens zwei magnetisch stabile Antriebsstellungen des Rotors 4 erzeugen. Dies ist der Darstellung gemäß Fig. 3 zu entnehmen.

Im Sinne der oben angesprochenen Auslegung des Begriffs "stationäre Bestromung" wird die Bestromung vorzugsweise lediglich aufgeschaltet, und nicht etwa im Hinblick auf einen bestimmten Bewegungsablauf o. dgl. geregelt. Dabei handelt es sich vorzugsweise um das Aufschalten einer, ggf. gepulsten, Gleichspannung auf die Spulenanordnung 5.

In besonders bevorzugter Ausgestaltung weist die Spulenanordnung 5 mindestens zwei Spulen, hier drei Spulen 8, 9, 10, auf, die jeweils einen Elektromagneten ausbilden. Im Sinne einer symmetrischen Antriebskraftverteilung sind die Spulen 8, 9, 10 vorzugsweise gleichmäßig um die geometrische Rotorachse 4a verteilt angeordnet.

Es sind verschiedene Möglichkeiten für die Ausgestaltung der Kopplungsanordnung 19 denkbar. Bei dem dargestellten und insoweit bevorzugten Ausführungsbeispiel (Fig. 2) weist die Kopplungsanordnung 19 eine Schleifringanordnung 20 zur elektrischen Kontaktierung der Spulenanordnung 5 auf. Alternativ kann es jedoch vorgesehen sein, dass die Kopplungsanordnung 19 eine flexible, hier nicht dargestellte Kabelanordnung zur elektrischen Kontaktierung der Spulenanordnung 5 aufweist.

Fig. 2 zeigt, dass die Schleifringanordnung 20 am Rotor 4 mindestens zwei, hier und vorzugsweise drei, voneinander isolierte Schleifringe 21, 22, 23 und zugeordnete Schleifkontakte 24, 25, 26 aufweist. Dabei ist es weiter vorzugsweise so, dass die Schleifringe 21, 22, 23 jeweils rotorwinkelunabhängig ein und denselben elektrischen Kontakt zu dem jeweiligen Schleifkontakt 24, 25, 26 bereitstellen.

Die Schleifringe 21, 22, 23 sind vorzugsweise als geschlossene Ringe ausgestaltet, deren Ringachsen auf die geometrische Rotorachse 4a ausgerichtet sind. Die den Schleifkontakten 24, 25, 26 zugeordneten Schleifflächen können beispielsweise eben und senkrecht zu der geometrischen Rotorachse 4a ausgerichtet sein. Dann handelt es sich bei den Schleifringen vorzugsweise um Scheiben. Hier und vorzugsweise verlaufen die Schleifflächen aber entlang einer Zylindermantelfläche. Sie sind im Querschnitt quer zu der geometrischen Rotorachse 4a kreisrund ausgestaltet.

Bei den Schleifkontakten 24, 25, 26 kann es sich um Metallkontakte, um Kohlebürsten o. dgl. handeln. Interessant bei der vorschlagsgemäßen Lösung ist die Tatsache, dass ein hoher Verschleiß bei den Schleifkontakten 24, 25, 26 angesichts der geringen Verfahrwege des Rotors 4 nicht zu erwarten ist. Ferner ist interessant, dass durch die rotorwinkelunabhängige Kontaktierung, die hier und vorzugsweise durch die Geschlossenheit der Schleifringe 21, 22, 23 bedingt ist, keine Kommutierung nach Art einer Gleichstrommaschine auftritt. verschleißerhöhende Effekte wie Bürstenfeuer o. dgl. können damit sicher vermieden werden.

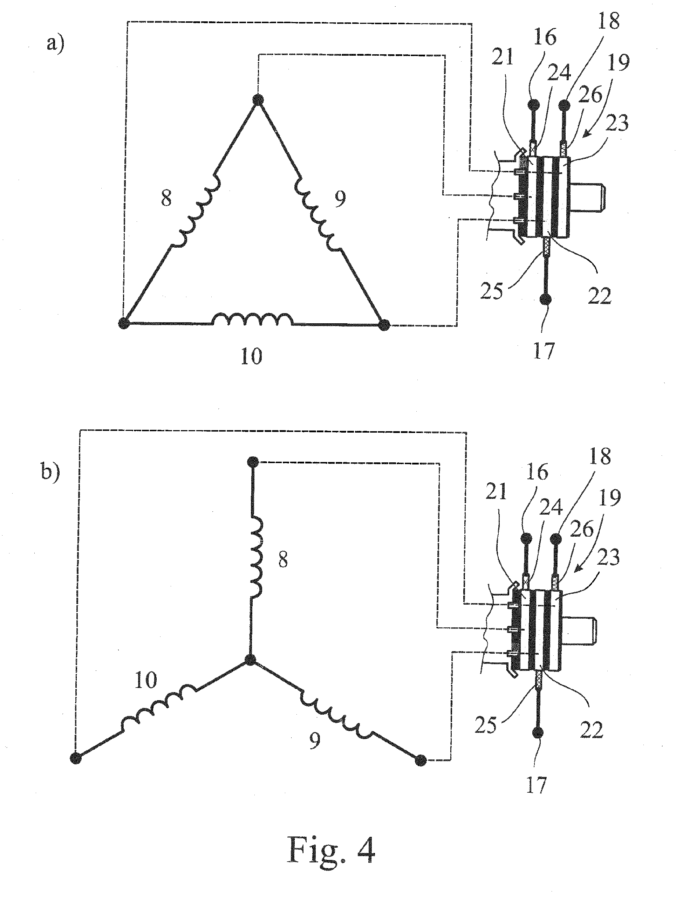

Der elektrischen Kopplung der Schleifringanordnung 20 mit der Spulenanordnung 5 kommt vorliegend besondere Bedeutung zu. Vorzugsweise ist jeder Schleifring 21, 22, 23 mit mindestens einer Spule 8, 9, 10 der Spulenanordnung 5, hier und vorzugsweise mit genau einer Spule 8, 9, 10 (Fig. 4a) oder mit genau zwei Spulen 8, 9, 10 (Fig. 4b) der Spulenanordnung 5, elektrisch gekoppelt, hier elektrisch verbunden.

Die Anzahl der Schleifringe 21, 22, 23 der Schleifringanordnung 20 entspricht im dargestellten und insoweit bevorzugten Ausführungsbeispiel der Anzahl der Spulen 8, 9, 10 der Spulenanordnung 5. Bei geeigneter Verschaltung lässt sich eine besonders einfache Ansteuerung der Spulenanordnung 5 realisieren.

Es kann vorteilhaft sein, dass die Anordnung so getroffen ist, dass während der Ansteuerung der Spulenanordnung 5 stets mindestens eine Spule 8, 9, 10, hier und vorzugsweise genau eine Spule 8, 9, 10, unbestromt ist. Das Anfahren der Antriebsstellungen erfolgt dann durch die verbleibenden bestromten Spulen 8, 9, 10. Dies lässt sich am Einfachsten bewerkstelligen, wenn die Spulen 8, 9, 10 der Spulenanordnung 5 elektrisch in einer Dreiecksschaltung verschaltet sind, wie in Fig. 4a gezeigt ist. Beispielsweise ergibt sich für den Fall, dass die Antriebsanschlüsse 16, 17 mit positivem Potential und der Antriebsanschluss 18 mit Massepotential beschaltet werden, eine Situation, bei der die Spulen 8, 10 bestromt sind. Nicht bestromt ist dagegen die Spule 9 durch die Gleichbeschaltung der Antriebsanschüsse 16, 17.

Alternativ dazu kann es vorgesehen sein, dass die Spulen 8, 9, 10 der Spulenanordnung 5 elektrisch in einer Sternschaltung verschaltet sind, wie in Fig. 4b dargestellt.

Bei dem in Fig. 4a dargestellten und insoweit bevorzugten Ausführungsbeispiel sind die Eckpunkte der dortigen Dreiecksschaltung jeweils mit einem Schleifring 21, 22, 23 verbunden. Entsprechend ist es bei der weiter bevorzugten Ausgestaltung gemäß Fig. 4b so, dass die Sternenden der dortigen Sternschaltung jeweils mit einem Schleifring 21, 22, 23 verbunden sind. Die in Fig. 4 dargestellten Verschaltungsvarianten sind mit einem geringen Verdrahtungsaufwand realisierbar.

Grundsätzlich ist es denkbar, dass zur Erzeugung der magnetisch stabilen Antriebsstellungen des Rotors 4 jeweils nur eine einzige Spule 8, 9, 10 angesteuert wird. In diesem Fall wird sich der Rotor 4 in eine Antriebsstellung verstellen, in der die magnetische Achse der Permanentmagnetanordnung 7 auf die magnetische Achse der einen angesteuerten Spule 8, 9, 10 ausgerichtet ist. Dabei sind die Lagen der Antriebsstellungen durch die konstruktive Ausgestaltung des Antriebs 3 festgelegt.

Im Sinne einer flexiblen Einstellung der Lage der jeweiligen Antriebsstellung ist es jedoch vorzugsweise so, dass zur Erzeugung der magnetisch stabilen Antriebsstellungen des Rotors 4 jeweils mindestens zwei Spulen 8, 9, 10 gleichzeitig angesteuert sind. In diesem Fall wird der Rotor 4 in eine Antriebsstellung verstellt, die sich aus dem resultierenden, von den Spulen 8, 9, 10 erzeugten Rotorfeld ergibt.

Vorzugsweise ist es bei der gleichzeitigen Ansteuerung mindestens zweier Spulen 8, 9, 10 so, dass die gleichzeitig angesteuerten Spulen 8, 9, 10 in der jeweiligen Antriebsstellung entgegengesetzte Drehmomente auf den Rotor 4 erzeugen. So lässt sich der für die Antriebsstellungen vorgesehene Gleichgewichtszustand durch eine entsprechende Ansteuerung der einzelnen Spulen 8, 9, 10 flexibel einstellen.

Die resultierenden Antriebsstellungen sind in der Darstellung gemäß Fig. 3 gezeigt. Aus dieser Darstellung geht hervor, dass in den Antriebsstellungen des Rotors 4 die magnetischen Achsen 8a, 9a, 10a der Spulen 8, 9, 10 der Spulenanordnung 5 jeweils bezogen auf die geometrische Rotorachse 4a winkelversetzt zu der magnetischen Achse 7a der Permanentmagnetanordnung 7 sind. Dies lässt sich der Darstellung gemäß Fig. 3 links oben beispielhaft entnehmen. Vorzugsweise ist die Permanentmagnetanordnung 7 bezogen auf die geometrische Rotorachse 4a diametral magnetisiert. Angesichts der Tatsache, dass die Permanentmagnetanordnung 7 bezogen auf die Rotorachse 4a insgesamt diametral magnetisiert ist, tritt der obige Winkelversatz stets zu der einen magnetischen Achse 7a der Permanentmagnetanordnung 7 auf. Denkbar ist aber auch, dass die Permanentmagnetanordnung 7 mehrpolig ausgestaltet ist.

Der in der Zeichnung dargestellte und insoweit bevorzugte Antrieb 3 ist nach Art einer Radialflussmaschine aufgebaut. Dies bedeutet, dass das magnetische Arbeitsfeld zwischen Rotor 4 und Stator 6 im Wesentlichen radial, insbesondere in dem ringabschnittförmigen Spalt zwischen Rotor 4 und Stator 6 verläuft. Die Magnetachsen 8a, 9a, 10a der Spulen 8, 9, 10 sind hier vorzugsweise ebenfalls bezogen auf die geometrische Rotorachse 4a radial ausgerichtet.

Eine besonders kompakte Ausgestaltung ergibt sich in einer nicht dargestellten Alternative dadurch, dass der Antrieb 3 nach Art einer Axialflussmaschine aufgebaut ist, bei der das magnetische Arbeitsfeld axial zwischen dem Rotor 4 und dem Stator 6 verläuft. Hier sind die Magnetachsen der Spulen vorzugsweise axial ausgerichtet. Die Begriffe "radial" und "axial" sind vorliegend stets bezogen auf die geometrische Rotorachse 4a zu verstehen.

Fig. 3 zeigt insgesamt fünf mögliche Antriebsstellungen des Antriebs 3, bei denen jeweils genau zwei Spulen 8, 9, 10 gleichzeitig bestromt sind. Die Antriebsstellungen entsprechen den Verriegelungszuständen "Entriegelt" - UL, "Verriegelt" - L, "Diebstahlgesichert" - DL, "Verriegelt- Kindergesichert" - L-CL und "Entriegelt-Kindergesichert" - UL-CL.

Im Verriegelungszustand UL sind die beiden Spulen 8, 10 bestromt, indem eine entsprechende Beschaltung der in Fig. 4a gezeigten Dreiecksschaltung vorgenommen wurde. Die Spule 9 bleibt unbestromt. Das resultierende magnetische Rotorfeld verursacht eine magnetisch stabile Antriebsstellung. Dies liegt daran, dass die Spule 8 mit dem Rotorflügel 13 magnetisch von dem Nordpol N des Permanentmagneten 12 und die Spule 10 mit dem Rotorflügel 15 magnetisch von dem Südpol S des Permanentmagneten 11 angezogen werden.

Die übrigen in Fig.3 dargestellten Antriebsstellungen lassen sich schlicht durch eine unterschiedliche Beschaltung der Antriebsanschlüsse 16, 17, 18 realisieren. Die Bestromungsrichtungen sind in Fig. 3 jeweils auf den Spulen 8, 9, 10 verzeichnet. Ein Punkt bedeutet dabei eine Bestromung aus der Zeichenebene heraus, ein Kreuz bedeutet dabei eine Bestromung in die Zeichenebene hinein.

Besonders interessant bei dem in Fig. 1 dargestellten Ausführungsbeispiel ist die Tatsache, dass das Stellelement 2 als Steuerwelle ausgestaltet ist. Hier und vorzugsweise weist die Steuerwelle mindestens einen axialen Steuerabschnitt 27 zum Ausleiten von Steuerbewegungen auf.

Bei dem dargestellten und insoweit bevorzugten Ausführungsbeispiel dient der Antrieb 3 der Einstellung verschiedener Verriegelungszustände des Kraftfahrzeugschlosses, wie oben erläutert. Hierfür weist das Kraftfahrzeugschloss zunächst eine Schlossmechanik 28 auf, die in die oben genannten Verriegelungszustände bringbar ist. Die Bedeutung dieser Funktionszustände für die Möglichkeit des Öffnens der Kraftfahrzeugtür o. dgl. von innen und von außen wurde im allgemeinen Teil der Beschreibung erläutert.

Zur Einstellung der verschiedenen Funktionszustände ist hier und vorzugsweise genau ein verstellbares Funktionselement 29 vorgesehen, wobei die Steuerwelle 2 in antriebstechnischem Eingriff mit dem Funktionselement 29 steht oder bringbar ist. Denkbar ist auch, dass die Steuerwelle 2 selbst ein Bestandteil des Funktionselements 29 ist.

Hier und vorzugsweise ist es so, dass sich das Funktionselement 29 an dem Steuerabschnitt 27 des Stellelements 2 abstützt. Je nach Stellung der Steuerwelle 2 verstellt sich das Funktionselement 29 im Wesentlichen senkrecht zu der geometrischen Stellelementachse 1, wie in Fig. 1 durch den Bewegungspfeil 31 und durch die gestrichelte Darstellung 30 des Funktionselements 29 dargestellt ist.

Die Steuerwelle 2 lässt sich mittels des Antriebs 3 nun in mindestens 2 Steuerstellungen, hier und vorzugsweise in insgesamt fünf Steuerstellungen bringen, um die in Fig. 3 angedeuteten Verriegelungszustände einstellen zu können. Besonders einfach gestaltet sich der Aufbau des Kraftfahrzeugschlosses bei dem dargestellten und insoweit bevorzugten Ausführungsbeispiel dadurch, dass das Funktionselement 29 als Draht ausgestaltet ist und in unterschiedliche Funktionsstellungen entlang des Bewegungspfeils 31 auslenkbar ist. Grundsätzlich ist es auch denkbar, dass das Funktionselement 29 als Streifen ausgestaltet ist. Hier und vorzugsweise ist es weiter so, dass das Funktionselement 29 als federelastischer Draht oder Streifen ausgestaltet ist und so als Biege-Funktionselement in die unterschiedlichen Funktionsstellungen biegbar ist.

Im Folgenden wird die Funktionsweise des Kraftfahrzeugschlosses in den Funktionszuständen "Entriegelt" und "Entriegelt-Kindergesichert" erläutert. Im Übrigen darf zur Erläuterung der grundsätzlichen Funktionsweise des Kraftfahrzeugschlosses mit federelastischem Funktionselement 29 auf die internationale Patentanmeldung WO 2009/040074 A1 verwiesen werden, die auf die Anmelderin zurückgeht und deren Inhalt insoweit zum Gegenstand der vorliegenden Anmeldung gemacht wird.

Im Funktionszustand "Entriegelt" steht das Funktionselement 29 in seiner in Fig. 1 unteren, in durchgezogener Linie dargestellten Stellung. Damit befindet sich das Funktionselement 29 im Bewegungsbereich eines Innenbetätigungshebels 32, der im montierten Zustand mit einem Türinnengriff gekoppelt ist sowie im Bewegungsbereich eines Außenbetätigungshebels 33, der im montierten Zustand mit einem Türaußengriff gekoppelt ist. Eine Verstellung des Innenbetätigungshebels 32 oder des Außenbetätigungshebels 33 in Richtung des Bewegungspfeils 34 führt dazu, dass das Funktionselement 29 senkrecht zu seiner Erstreckung der Bewegung des jeweiligen Hebels 32, 33 folgt, auf die in Fig. 1 nur angedeutete Sperrklinke 35 trifft und diese wiederum in Richtung des Bewegungspfeils 34 mitnimmt und aushebt.

Eine Verstellung der Steuerwelle 2 in Richtung des Bewegungspfeils 36 um 90° aus der in Fig. 1 dargestellten Stellung heraus führt zur Einstellung des Funktionszustands "Entriegelt-Kindergesichert". In diesem Zustand befindet sich das Funktionselement 29 in der in Fig.1 in gestrichelter Linie dargestellten und mit dem Bezugszeichen 30 versehenen Stellung. Eine Verstellung des Innenbetätigungshebels 32 in Richtung des Bewegungspfeils 34 hat damit keine Auswirkung auf das Funktionselement 29 und die Sperrklinke 35. Das Funktionselement 29 befindet sich allerdings unverändert im Bewegungsbereich des Außenbetätigungshebels 33, so dass ein Ausheben der Sperrklinke 35 und damit ein Öffnen der Kraftfahrzeugtür über den Außenbetätigungshebel 33 und damit über den Türaußengriff möglich ist.

Analog zu der Einstellung der oben beschriebenen Funktionszustände "Entriegelt" und "Entriegelt-Kindergesichert" lassen sich auch alle anderen oben angesprochenen Funktionszustände allein durch eine entsprechende Verstellung der Steuerwelle 2 umsetzen. Der Antrieb 3 ist dazu ausgelegt, alle Funktionszustände entsprechend anzufahren.

Nach einer weiteren Lehre, der eigenständige Bedeutung zukommt, wird ein obiges Kraftfahrzeugschloss beansprucht, bei dem die Anordnung so getroffen ist, dass in den Antriebstellungen des Rotors 4 die magnetischen Achsen 8a, 9a, 10a der Spulen 8, 9, 10 der Spulenanordnung 5 jeweils bezogen auf die geometrische Rotorachse 4a winkelversetzt zu der magnetischen Achse 7a bzw. den magnetischen Achsen der Permanentmagnetanordnung 7 sind. Auf die Realisierung einer gemäß der ersten Lehre vorgeschlagenen, rotorwinkelunabhängigen Kopplungsanordnung 19 kommt es hier nicht an.

Nach einer weiteren Lehre, der ebenfalls eigenständige Bedeutung zukommt, wird ein Verfahren zur Ansteuerung eines der vorschlagsgemäßen Kraftfahrzeugschlösser beansprucht. Wesentlich dabei ist die Tatsache, dass die Spulenanordnung 5 für das Erzeugen von mindestens 2 magnetisch stabilen Antriebsstellungen des Rotors 4 unterschiedlich stationär bestromt wird. Auf alle oben angesprochenen Ausführungen zu den vorschlagsgemäßen Kraftfahrzeugschlössern darf verwiesen werden.

## Patentansprüche

1. Kraftfahrzeugschloss mit einem Stellelement (2) und einem Antrieb (3) für die Verstellung des Stellelements (2), wobei der Antrieb (3) einen Rotor (4) mit einer Spulenanordnung (5) und einen Stator (6) mit einer Permanentmagnetanordnung (7) aufweist, wobei die Spulenanordnung (5) mindestens eine Spule (8, 9, 10) zur Erzeugung eines magnetischen Rotorfelds und die Permanentmagnetanordnung (7) mindestens einen Permanentmagneten (11, 12) zur Erzeugung eines magnetischen Statorfelds aufweist,
**dadurch gekennzeichnet,**
**dass** elektrische Antriebsanschlüsse (16, 17, 18) vorgesehen sind, die über eine Kopplungsanordnung (19) rotorwinkelunabhängig mit der Spulenanordnung (5) des Rotors (4) elektrisch gekoppelt sind und dass durch eine Ansteuerung der Spulenanordnung (5) über die Antriebsanschlüsse (16, 17, 18) mindestens zwei magnetisch stabile Antriebsstellungen des Rotors (4) erzeugbar sind.

2. Kraftfahrzeugschloss nach Anspruch 1, **dadurch gekennzeichnet, dass** durch unterschiedliche stationäre Bestromung der Spulenanordnung (7) mindestens zwei magnetisch stabile Antriebsstellungen des Rotors (4) erzeugbar sind.

3. Kraftfahrzeugschloss nach Anspruch 1 oder 2, **dadurch gekennzeichnet, dass** die Spulenanordnung (5) mindestens zwei Spulen (8, 9, 10) aufweist, die jeweils einen Elektromagneten ausbilden, vorzugsweise, dass mehr als zwei Spulen (8, 9, 10), insbesondere drei Spulen (8, 9, 10), vorgesehen sind, die gleichmässig um die geometrische Rotorachse (4a) verteilt angeordnet sind, vorzugsweise, dass die Magnetachsen (8a, 9a, 10a) der Spulen (8, 9, 10) bezogen auf die geometrische Rotorachse (4a) um 120° zueinander versetzt sind, oder, dass die Magnetachsen (8a, 9a, 10a) der Spulen (8, 9, 10) parallel zueinander, vorzugsweise parallel zu der geometrischen Rotorachse (4a) angeordnet sind.

4. Kraftfahrzeugschloss nach einem der vorhergehenden Ansprüche, **dadurch gekennzeichnet, dass** die Kopplungsanordnung (19) eine Schleifringanordnung (20) zur elektrischen Kontaktierung der Spulenanordnung (5) aufweist, oder, dass die Kopplungsanordnung (19) eine flexible Kabelanordnung zur elektrischen Kontaktierung der Spulenanordnung (5) aufweist.

5. Kraftfahrzeugschloss nach Anspruch 4, **dadurch gekennzeichnet, dass** die Schleifringanordnung (20) am Rotor (4) mindestens zwei Schleifringe (21, 22, 23) und zugeordnete Schleifkontakte (24, 25, 26) aufweist, vorzugsweise, dass die Schleifringe (21, 22, 23) jeweils rotorwinkelunabhängig ein und denselben elektrischen Kontakt zu dem jeweiligen Schleifkontakt (24, 25, 26) bereitstellen.

6. Kraftfahrzeugschloss nach Anspruch 4 oder 5, **dadurch gekennzeichnet, dass** jeder Schleifring (21, 22, 23) mit mindestens einer Spule (8, 9, 10) der Spulenanordnung (5), vorzugsweise mit genau einer Spule (8, 9, 10) oder mit genau zwei Spulen (8, 9, 10) der Spulenanordnung (5), elektrisch gekoppelt, insbesondere verbunden, ist.

7. Kraftfahrzeugschloss nach einem der vorhergehenden Ansprüche, **dadurch gekennzeichnet, dass** die Spulen (8, 9, 10) der Spulenanordnung (5) elektrisch in einer Dreiecksschaltung verschaltet sind, oder, dass die Spulen (8, 9, 10) der Spulenanordnung (5) elektrisch in einer Sternschaltung verschaltet sind.

8. Kraftfahrzeugschloss nach Anspruch 7, **dadurch gekennzeichnet, dass** die Eckpunkte der Dreiecksschaltung bzw. die Sternenden der Sternschaltung jeweils mit einem Schleifring (21, 22, 23) verbunden sind.

9. Kraftfahrzeugschloss nach einem der vorhergehenden Ansprüche, **dadurch gekennzeichnet, dass** zur Erzeugung der magnetisch stabilen Antriebsstellungen des Rotors (4) jeweils mindestens zwei Spulen (8, 9, 10) gleichzeitig angesteuert sind, vorzugsweise, dass die gleichzeitig angesteuerten Spulen (8, 9, 10) in der jeweiligen Antriebsstellung entgegengesetzte Drehmomente auf den Rotor (4) erzeugen.

10. Kraftfahrzeugschloss nach einem der vorhergehenden Ansprüche, **dadurch gekennzeichnet, dass** in zumindest einem Teil der Antriebsstellungen des Rotors (4) die magnetischen Achsen (8a, 9a, 10a) der Spulen (8, 9, 10) der Spulenanordnung (5) jeweils bezogen auf die geometrische Rotorachse (4a) winkelversetzt zu der magnetischen Achse (7a) bzw. den magnetischen Achsen der Permanentmagnetanordnung (7) sind.

11. Kraftfahrzeugschloss nach einem der vorhergehenden Ansprüche, **dadurch gekennzeichnet, dass** der Antrieb (3) nach Art einer Radialflussmaschine aufgebaut ist, oder, dass der Antrieb (3) nach Art einer Axialflussmaschine aufgebaut ist.

12. Kraftfahrzeugschloss nach einem der vorhergehenden Ansprüche, **dadurch gekennzeichnet, dass** das Stellelement (2) als Steuerwelle mit mindestens einem axialen Steuerabschnitt (27) zum Ausleiten von Steuerbewegungen ausgestaltet ist.

13. Kraftfahrzeugschloss nach einem der vorhergehenden Ansprüche, **dadurch gekennzeichnet, dass** das Kraftfahrzeugschloss eine Schlossmechanik (28) aufweist, die in unterschiedliche Funktionszustände wie "Verriegelt", "Entriegelt", "Diebstahlgesichert", "Verriegelt-Kindergesichert" und "Entriegelt-Kindergesichert" bringbar ist, wobei zur Einstellung der verschiedenen Funktionszustände mindestens ein verstellbares Funktionselement (29) vorgesehen ist, wobei das Stellelement (2) in antriebstechnischem Eingriff mit dem Funktionselement (29) steht oder bringbar ist oder Bestandteil des Funktionselements (29) ist, vorzugsweise, dass sich das Funktionselement (29) an einem Steuerabschnitt (27) des Stellelements (2) abstützt.

14. Kraftfahrzeugschloss mit einem Stellelement (2) und einem Antrieb (3) für die Verstellung des Stellelements (2), wobei der Antrieb (3) einen Rotor (4) mit einer Spulenanordnung (5) und einen Stator (6) mit einer Permanentmagnetanordnung (7) aufweist, wobei die Spulenanordnung (5) mindestens eine Spule (8, 9, 10) zur Erzeugung eines magnetischen Rotorfelds und die Permanentmagnetanordnung (7) mindestens einen Permanentmagneten (11, 12) zur Erzeugung eines magnetischen Statorfelds aufweist,
**dadurch gekennzeichnet,**
**dass** durch eine Ansteuerung der Spulenanordnung (5) mindestens zwei magnetisch stabile Antriebsstellungen des Rotors (4) erzeugbar sind und dass in zumindest einem Teil der Antriebsstellungen des Rotors (4) die magnetischen Achsen (8a, 9a, 10a) der Spulen (8, 9, 10) der Spulenanordnung (5) jeweils bezogen auf die geometrische Rotorachse (4a) winkelversetzt zu der magnetischen Achse (7a) bzw. den magnetischen Achsen der Permanentmagnetanordnung (7) sind.

15. Kraftfahrzeugschloss nach Anspruch 14, **gekennzeichnet durch** den kennzeichnenden Teil eines oder mehrerer der Ansprüche 1 bis 13.

16. Verfahren zur Ansteuerung eines Kraftfahrzeugschlosses nach einem der Ansprüche, **dadurch gekennzeichnet, dass** die Spulenanordnung (7) für das Erzeugen von mindestens zwei magnetisch stabilen Antriebsstellungen des Rotors (4) unterschiedlich stationär bestromt wird.
